# EUROPÄISCHE PATENTANMELDUNG

(11) **EP 0 866 625 A1**
(43) Veröffentlichungstag der Anmeldung: **23.09.1998**
(21) Anmeldenummer: 97104704.8
(22) Anmeldetag: 19.03.1997
(51) Int. Cl.: H04Q 3/00

(54) **Netz-SCP eines IN-Netzes**

(71) Anmelder: SIEMENS AKTIENGESELLSCHAFT, 80333 München (DE)
(72) Erfinder: Sevcik, Maximilian, Dipl.-Ing., 81739 München (DE)

(57) **Zusammenfassung**

Der Eigentümer eines Privat-SCP kann bisher nicht mit vorhandenen Service-Applikationen eines Netz-SCP zusammenarbeiten. Durch die Erfindung wird dieses Problem gelöst.

## Beschreibung

Das Intelligente Netz (abgekürzt: IN) für z.B. PSTN / ISDN ist eine bekannte Netz-Architektur zur Bereitstellung von Telekommunikationsdiensten.

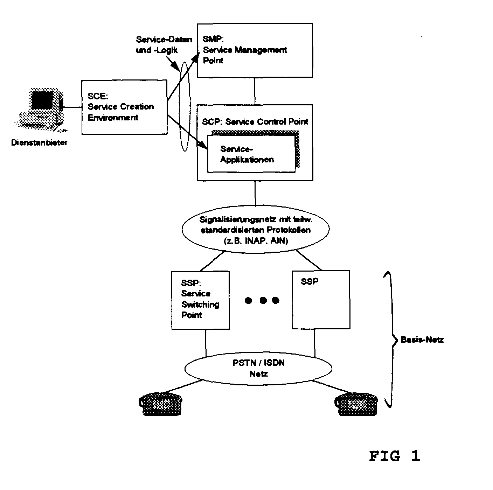

FIG 1 zeigt eine bekannte IN-Architektur. Das Intelligente Netz soll es einem Netzbetreiber ermöglichen, neue Dienste (Services) rasch und problemlos einzuführen, ohne dafür in jedem Netzknoten Eingriffe in die Anlagenprogrammsysteme vornehmen zu müssen.

Die genannten Eingriffe werden deshalb in einem IN auf möglichst wenige zentrale Netzknoten, sogenannten Service Control Points SCP beschränkt, die an zentraler Stelle mit der entsprechenden Applikations-Software für die neuen Dienste, den sogenannten Service-Applikationen ausgerüstet werden und dann in einer Art 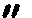 Fernsteuerung" die einzelnen Netzknoten im Basis-Netz in die Lage versetzen, die neuen Dienste auszuführen. Der SCP eines (öffentlichen oder privaten) Netzbetreibers wird im folgenden auch als Netz-SCP bezeichnet.

Die genannten ferngesteuerten Netzknoten des IN werden auch als Dienst-Zugangsknoten oder Service Switching Points SSP bezeichnet. Sie sind direkt oder über ein Signalisierungsnetz mit einem Service Control Point SCP verbunden.

Ein Service Management Point SMP dient zum Administrieren der IN-Dienste durch den Netzbetreiber, den Dienstanbieter und den Dienstteilnehmer.

Netzbetreiber bzw. Dienstanbieter sind daran interessiert, neue Dienste festzulegen oder bestehende Dienste weiterzuentwickeln. Hierzu wird ein Service Creation Environment (SCE) eingesetzt. Die Aufgabe des SCE besteht darin, Service-Daten und Service-Logik (Programme) in die SCPs und SMPs einzubringen, ohne daß bestehende Service-Applikationen oder gar das Basis-Netz in ihrer Funktionalität und Integrität betroffen werden.

Aus diesen Gründen ist der Stand der SCE-Technik heute beschränkt auf das Modifizieren von vorhandenen Service-Applikationen in den genau dafür vorgesehenen Funktionen (Service Customization) bzw. auf den Aufbau von neuen Diensten aus Funktionsbausteinen mit genau durch den Hersteller festgelegten Funktionen (Service Independent Building Blocks: SIB).

In beiden Fällen können nur Varianten von den durch den Hersteller bestimmten Diensten oder Dienst-Funktionen erzeugt werden.

Wirklich neue Dienst-Funktionen können kaum entwickelt werden, insbesondere nicht durch den Dienstanbieter, der sonst keinen Zugang zu den Funktionen im Basis-Netz bzw. SCP/SMP hat. Die Öffnung eines SCP/SMP für die Dienste-Entwicklung durch Dritte scheitert vor allem an den enormen Sicherheitsproblemen und Nebenwirkungen auf die vorhandenen Dienste.

Um derartige Probleme zu bewältigen wurde die bekannte Technik des 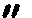 privaten" SCP (im folgenden auch als Privat-SCP bezeichnet) entwickelt, d.h. von SCPs, die einem privaten Dienstanbieter oder sogar einem Kunden (Customer), der seinen eigenen Dienst nutzt, gehören. Dabei werden die durch Dritte entwickelten Dienste in einem physisch separatem, mit dem Netz-SCP verbundenem, privaten SCP ablaufen, wobei der zentralisierte Netz-SCP die notwendigen Sicherheitsfunktionen (gateways) ausführt.

Die genannte Technik ist aus dem Dokument 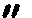 Customers in Driver's Seat: Private IN Control Point, von R. Lüder, M. Sevcik" bekannt, die im folgenden mit 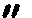 [1]" referenziert wird.

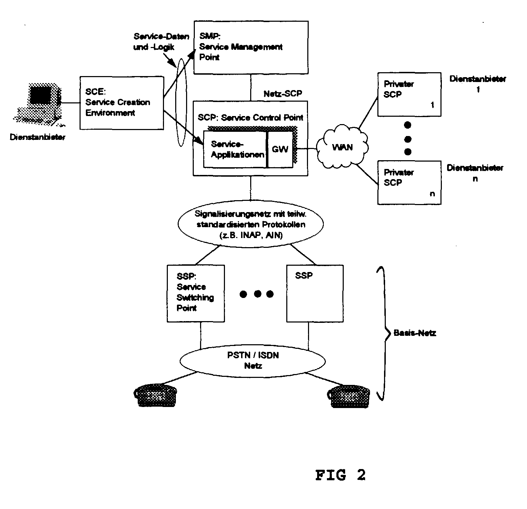

FIG 2 zeigt eine um den Anschluß von privaten SCPs erweiterte IN Architektur nach [1]. Die wesentlichen Erweiterungen betreffen folgende Komponenten:
1) Jeder Dienstanbieter entwickelt seine Dienste in einem privaten SCP Rechnerknoten.
2) Die privaten SCP sind über ein sicheres Datenkommunikationsnetz (wide area network: WAN) mit dem Netz SCP verbunden. Der WAN basiert auf bekannten Industriestandards, wie z.B. die Internet Protokolle (IP).
3) Die Protokollnachrichten mit dem Basis-Netz werden via eine sichere Gateway GW im Netz-SCP ausgetauscht. Die Protokolle (ihre Anwendungsteile) sind bekannt und entsprechen den int. Standards wie INAP, AIN oder entsprechenden Untermengen davon. Die Gateway GW verhindert, daß fehlerbehaftete Nachrichten oder unerlaubte Funktionen das Basis-Netz beeinflussen. Der Eigentümer (Netzbetreiber) des Netz-SCP kann z.B. festlegen, welche Netzfunktionen (z.B. INAP-Operationen) für die privaten SCP freigegeben werden. Durch die Nichtfreigabe kann eine bestimmte sensitive Netzfunktion von einem privaten SCP nicht genutzt werden (z.B. Vergebührung).

Aufgrund der genannten Erweiterungen ist der Dienstanbieter, als Eigentümer eines privaten SCP, also frei in der Gestaltung seiner Dienste und Dienst-Daten.

Der Nachteil ist, daß keine Zusammenarbeit (interworking) mit den vorhandenen Service-Applikationen im Netz-SCP möglich ist. Dies wäre sehr nützlich und kostensparend, da viele Dienst-Funktionen aus den vorhandenen Service-Applikationen auch für die Dienste im privaten SCP eines Dienstanbieters ohne weiteres verwendbar sind. Beispiele:
- Routing
- Vergebührung
- Steuerung eine Intelligent Peripherals (für die Ansagen etc.)
   etc.

Der Erfindung liegt die Aufgabe zugrunde, den genannten Nachteil zu überwinden.

Der Vorteil der Erfindung liegt in der Nutzungsmöglichkeit der vorhandenen Applikationen des Netz-SCP durch Privat-SCP bzw Service Creation Environment des Privat-SCP.

Eine Ausführungsform der Erfindung gemäß Anspruch 8 hat den Vorteil, daß die Dynamik verbessert wird, da der Privat-SCP für den Aufruf des Netz-SCP keine logische Adresse verwenden muß.

Im folgenden wird ein Ausführungsbeispiel der Erfindung anhand der Zeichnung beschrieben.

Zunächst kann ein Dienstanbieter mithilfe des SCE wie bisher in seinem privaten SCP beliebige Dienste entwickeln, welche sich der durch die Gateway GW festgelegten INAP, AIN Protokolluntermenge bedienen. Die Sicherheit des Basis-Netzes bleibt dabei gewährleistet.

Zusätzlich kann ein Dienstanbieter nunmehr in seinem privaten SCP auf vorhandene einzelne Dienst-Funktionen in den Service-Applikationen im Netz-SCP (siehe Figur 2) zugreifen und diese modifizieren, bzw. durch eigene im privaten SCP entwickelte Funktionen ersetzen. Dadurch wird eine vorteilhafte Zusammenarbeit des Privat-SCP mit dem Netz-SCP erreicht.

Dies kann wie folgt realisiert werden:

Die Service-Applikationen im Netz SCP werden logisch, d.h. aus der Sicht des Privat-SCP, in isolierte Funktionsblöcke, die jeweils eine Dienstfunktion repräsentieren, aufgeteilt. Zwischen den Funktionsblöcken sind Ausstiegspunkte (Point in Call: PIC) definiert, in welchen eine Dienst-Funktion in einem privaten SCP aufgerufen werden kann.

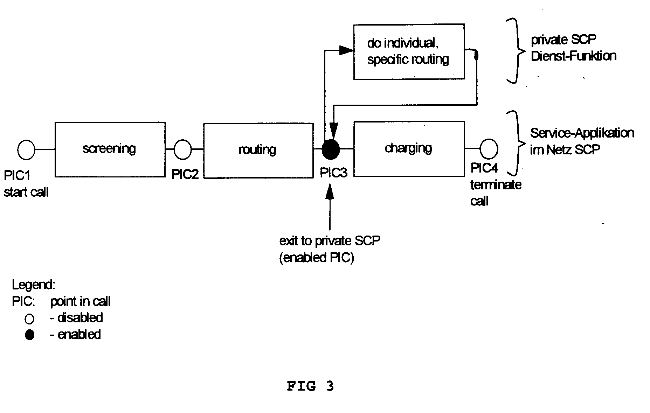

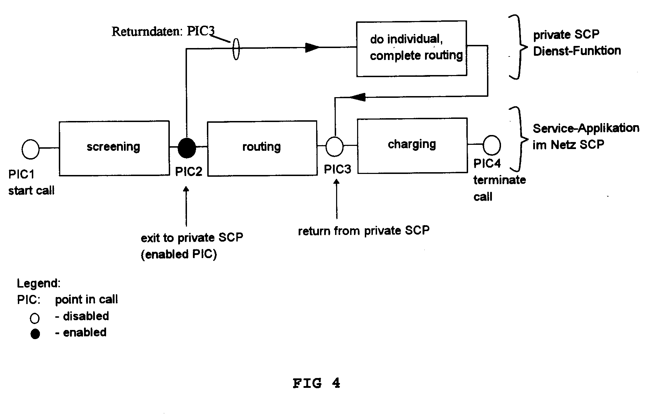

Die Figur 3 und 4 zeigen das Prinzip der Zusammenarbeit des Privat-SCP mit dem Netz-SCP mithilfe von Funktionsblöcken und PICs:

In den dargestellten Beispielen besteht eine Service-Applikation im Netz-SCP aus drei Funktionsblöcken (screening, routing, charging) und vier Points in Call (PIC 1..4) in welchen der Ausstieg in eine Dienst-Funktion im privaten SCP möglich ist.

Jeder PIC kann unabhängig von den anderen PICs 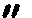 disabled" oder 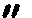 enabled" sein. Bei einem disabled PIC übergeht die Kontrolle von einem Funktionsblock direkt zum anderen in der gleichen Service-Applikation. Ein 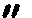 enabled" PIC bewirkt, daß eine Funktion im privaten SCP aufgerufen wird (z.B. via bekannte Methoden wie Remote Procedure Call).

Jedem PIC werden bestimmte Daten der Service-Applikation zugeordnet, die dem aktuellen Zustand der Rufbehandlung entsprechen (z.B. der Ursprungsbereich und die gewählte Route im Netz-SCP, im Beispiel in der Figur 3). Die Gateway GW (siehe Figur 2) garantiert die Integrität dieser Aufrufe und ihrer Daten.

Die PICs im Netz-SCP können durch Service Parametrisierung (customization) im Service Creation Environment (SCE) beliebig für jeden Dienstanbieter 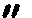 disabled" oder 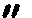 enabled" gesetzt werden, entsprechend den im jeweiligen privaten SCP zu behandelnden Dienst-Funktionen. Das Setzen der PICs bewirkt Einträge in ein entsprechendes Registriermittel (z.B. Service-Applikation-Register) des Netz-SCP.

Der Lieferant der Service-Applikationen (Hersteller der Netzelemente, SCP etc.) testet alle Service-Applikationen mit allen sinnvollen Kombinationen von PICs und den entsprechenden Gateway GW Funktionen. Dadurch wird die Integrität des Basis-Netzes und der Service-Applikationen gewährleistet.

Der Dienstanbieter kann in seinem privaten SCP die Behandlung einer Dienst-Funktion beliebig mit seinen spezifischen Daten, Daten-Managementfunktionen oder Programmsoftware verknüpfen. Z. B. kann im Routing-Beispiel in der Figur 3 eine Kunden-Datenbasis mit Kaufpräferenzen des rufenden Kunden als Grundlage für die Wahl einer Route zu einem für diesen Kunden spezialisierten Sachbearbeiter herangezogen werden.

In FIG 3 wird eine zwischen zwei PICs liegende Funktion (hier die Funktion Routing zwischen PIC2 und PIC3) durch eine Dienstfunktion im Privat-SCP ergänzt.

In FIG 4 wird eine zwischen zwei PICs liegende Funktion (hier die Funktion Routing zwischen PIC2 und PIC3) vollständig durch eine Dienstfunktion im Privat-SCP ersetzt. Hierzu werden in einem 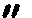 enabled" PIC (hier PIC2) die Rücksprungdaten (PIC-Returndaten) zum nächsten PIC an die private Dienst-Funktion angegeben.

Die Erfindung bietet folgende Vorteile:
1) Der Netzbetreiber kann den Dienstanbietern (seinen Kunden) über den Netz-SCP gefahrlos (keine Beeinträchtigung des Basis-Netzes) eine Applikation anbieten, die via Privat-SCP des Dienstanbieters individuell erweiterbar bzw. modifizierbar ist.
2) Dienstanbieter können Dienst-Applikationen bzw. Dienst-Funktionen rasch erweitern und gezielt anbieten, ohne daß sie komplexe Service-Applikationen vollständig neu entwickeln müssen. Die Dienst-Funktionen können mit anderen DV-Anwendungen des Dienstanbieters kombiniert werden.
3) Kleiner Testaufwand, da die Service-Applikationen vom Lieferanten vorgetestet sind. Schnelle Inbetriebnahme von spezifischen Dienst-Funktionen.

## Patentansprüche

1. Netz-SCP eines IN-Netzes,
a) der in dem IN-Netz Service-Applikationen bereitstellt,
b) der über ein weiteres Netz mit mindestens einem Privat-SCP eines Dienstanbieters und/oder Diensteigennutzers verbunden ist,
c) der mit einem Privat-SCP in der Weise zusammenarbeitet, daß er die Bearbeitung eines Calls für eine Service-Applikation an bestimmten Stellen (PIC) abbbricht, um einen Privat-SCP aufzurufen, und/oder daß er sich von einem Privat-SCP an bestimmten Stellen (PIC) aufrufen läßt, um die Bearbeitung einer Service-Applikation fortzuführen.

2. Netz-SCP nach Anspruch 1,
**dadurch gekennzeichnet, daß**
er ein modifizierbares Registriermittel enthält, in dem er zu einer Service-Applikation vermerkt, welcher Privat-SCP bei dieser Service-Applikation die Zusammenarbeit mit dem Netz-SCP angefordert hat und an welchen Stellen (PIC) der Privat-SCP von dem Netz-SCP aufgerufen werden will.

3. Netz-SCP nach einem der Ansprüche 1 oder 2,
**dadurch gekennzeichnet, daß**
der Netz-SCP bei einer Service-Appl., für die ein bestimmter Privat-SCP die Zusammenarbeit mit ihm anfordert, dem Privat-SCP die Referenzdaten für diejenigen Stellen (PIC) übergibt, an denen der Privat-SCP den Netz-SCP aufrufen will.

4. Netz-SCP nach einem der Ansprüche 1 bis 3,
**dadurch gekennzeichnet, daß**
der Netz-SCP ein Gateway umfaßt, das dafür sorgt, daß der Privat-SCP bei der Ausführung seiner Dienstfunktion nur eine im ersten Netz zugelassene Protokolluntermenge und/oder Daten der Service-Applikationen verwenden darf.

5. Service Creation Environment für einen Privat-SCP, mit
a) einem Entwicklungs-Mittel, durch das eine für den Ablauf im Privat-SCP bestimmte Dienstfunktion entwickelt werden kann,
b) einem Eingabe-Mittel, das es ermöglicht, dem Netz-SCP über den Privat-SCP mitzuteilen, an welchen Stellen (PIC) der Privat-SCP vom Netz-SCP aufgerufen werden will.

6. Service Creation Environment nach Anspruch 5, mit einem Eingabe-Mittel, das es ermöglicht, dem Netz-SCP über den Privat-SCP mitzuteilen, an welchen Stellen (PIC) der Privat-SCP vom Netz-SCP aufgerufen werden will und für welche Stellen der Privat-SCP vom Netz-SCP bei diesen Aufrufen Referenzdaten (PIC-Returndaten) bekommen will.

7. Privat-SCP,
a) der mit einem Netz-SCP verbunden ist,
b) der die Zusammenarbeit mit dem Netz-SCP bezüglich einer Service-Applikation in der Weise anfordern kann, daß er an bestimmten Stellen (PIC) einer Appl vom Netz-SCP aufgerufen werden will.

8. Privat-SCP
**dadurch gekennzeichnet, daß**
er für die Zusammenarbeit mit dem Netz-SCP außerdem anfordern kann, daß er vom Netz-SCP Referenzen (PIC-Returndaten) auf bestimmte Stellen (PIC) einer Appl, an denen er den Netz-SCP aufrufen will, erhalten will.

9. Privat-SCP,
a) der mit einem Netz-SCP verbunden ist,
b) die Zusammenarbeit mit dem Netz-SCP an bestimmten Stellen (PIC) einer Service-Applikation anfordern kann,
c) der den Netz-SCP an den angeforderten Stellen (PIC) aufruft, um auf diese Weise mit dem Netz-SCP bei der Bearbeitung einer Service-Applikation zusammenzuarbeiten.
